# EUROPÄISCHE PATENTSCHRIFT

(11) **EP 0 677 723 B1**
(45) Veröffentlichungstag und Bekanntmachung des Hinweises auf die Patenterteilung: **23.06.1999**
(21) Anmeldenummer: 95105333.9
(22) Anmeldetag: 08.04.1995
(51) Int. Cl.: G01G 13/06

(54) **Dosierer für Abfüllwaage mit Feinstromausnehmung und Trennwand**
Feeder for potting scale with dribble flow recess and partition wall
Doseur pour balance de mise en boîte avec creux de flux d'appoint et cloison de séparation

(30) Priorität: 13.04.1994 DE 4412660
(43) Veröffentlichungstag der Anmeldung: 18.10.1995
(73) Patentinhaber: Optima-Maschinenfabrik Dr. Bühler GmbH & Co., 74523 Schwäbisch Hall (DE)
(72) Erfinder: Braun, Thomas, D-74523 Schwäbisch Hall (DE); Gwinner, Werner, D-74538 Rosengarten (DE)
(74) Vertreter: Patentanwälte Ruff, Beier, Schöndorf und Mütschele

(56) Entgegenhaltungen:
- EP-A- 0 223 088
- EP-A- 0 268 346
- EP-A- 0 348 592
- EP-A- 0 555 765
- BE-A- 1 000 561
- DE-B- 1 063 396
- DE-U- 1 892 814
- DE-U- 1 948 182
- GB-A- 2 188 740
- US-A- 3 720 286
- HERMANN GERICKE: "Dosieren von Feststoffen (Schüttgütern), Seite 101" , , GERICKE GMBH, RIELASINGEN (DE) 1989

## Beschreibung

Die Erfindung geht aus von einer Vorrichtung zum Dosieren von Volumina und/oder Gewichten eines freifließenden Gut (DE-U-1948182).

Beispiele für eine derartige Vorrichtung sind Abfüllwaagen.

Bei den derzeit auf dem Markt befindlichen Abfüllwaagen wird mit Hilfe eines verstellbaren Schiebers ein Produktfluß eingestellt, der u. a. von dem abzufüllenden Material abhängt. Aus dem derart eingestellten Produktfluß werden dann Portionen durch eine Absperrklappe hergestellt, die ein bestimmtes Gewicht oder ein bestimmtes Volumen aufweisen sollen.

Zur Einstellung des Produktflusses werden beispielsweise Linearschieber verwendet (DE-A1-35 36 347).

Ebenfalls bekannt ist eine Abfüllwaage (DE-A1-42 03 883), bei der zur Einstellung des Produktflusses ein Drehschieber verwendet wird.

Weiterhin bekannt ist eine Vorrichtung zur Einstellung der Durchlaufquerschnitte für den Haupt- und Feinstrom an Einläufen für Waagen (DE-GBM 19 48 182). Hierbei ist am unteren Ende des Schachts eine Drehklappe angeordnet, die zwischen einer Öffnungsstellung und einer Schließstellung verschwenkt werden kann. Beide Stellungen sind durch verstellbare Anschläge definiert.

Der Erfindung liegt die Aufgabe zugrunde, eine Vorrichtung der eingangs genannten Art zu schaffen, die bei einfachem Aufbau auch für unterschiedliche Güter und unterschiedlich große Gewichte bzw. Volumina eine exakte und schnelle Dosierung ermöglicht.

Zur Lösung dieser Aufgabe schlägt die Erfindung eine Vorrichtung mit den Merkmalen des Anspruchs 1 vor. Weiterbildungen der Erfindung sind Gegenstand der Unteransprüche.

Die Vorrichtung nach der Erfindung kommt im Gegensatz zu den zur Zeit auf dem Markt befindlichen Wägevorrichtungen ohne eine Einstellung der Produktschichtdicke aus. Sie verwendet eine einzige Drehklappe, deren verschiedene Stellungen auf das zu behandelnde Gut bzw. die abzumessenden Mengen eingestellt werden können. Durch den Verzicht auf einen Schieber zur Einstellung der Schichtdicke verringert sich der konstruktive Aufwand der Vorrichtung. Es hat sich überraschenderweise herausgestellt, daß trotz der vereinfachten Ausführung die der Erfindung zugrundeliegende Aufgabe gelöst werden kann. Die verschiedenen möglichen Positionen der Drehklappe werden durch geeignete Rückmeldungseinrichtungen oder durch die entsprechende Ausbildung der Ansteuerung der Drehklappe durch den Antrieb bestimmt. Es sind keine verstellbaren mechanischen Anschläge für die Einstellung der verschiedenen Positionen erforderlich. Selbstverständlich können Endanschläge vorgesehen sein, die eine maximal mögliche Verschwenkbarkeit der Drehklappe definieren.

Insbesondere kann vorgesehen sein, daß die der Rückwand gegenüberliegende Vorderwand des Schachts nicht verstellbar ausgebildet ist.

Unter Rückwand ist im Sinne der vorliegenden Anmeldung diejenige Wand des Schachts zu verstehen, auf der sich der Produktfluß bildet, und auf die sich die Drehklappe beim Übergang in die Schließstellung hin bewegt. Diese Rückwand verläuft beispielsweise leicht gegenüber der Senkrechten geneigt, beispielsweise unter einem Winkel von etwa 30°.

Erfindungsgemäß kann die Drehklappe eine Öffnungsstellung aufweisen, die einer Grobflußstellung entspricht.

Bei einem üblichen Dosiervorgang wird die Klappe zunächst in die Grobflußstellung geöffnet, bis eine bestimmte Menge des zu behandelnden Guts durchgeflossen ist. Diese Menge kann durch die eigentliche Auswägeeinrichtung festgestellt werden. Anschließend bewegt der Antrieb die Drehklappe in eine zweite Öffnungsstellung, die einer Feinflußstellung entspricht. Hier fließt das Gut so lange, bis die gewünschte Menge oder das gewünschte Gewicht von der Wägevorrichtung festgestellt wurde. Anschließend wird die Klappe vollständig geschlossen.

Stellt die Wägevorrichtung fest, daß die gewünschte Menge bzw. das gewünschte Gewicht noch nicht erreicht ist, kann die Drehklappe nochmals etwas geöffnet werden, und zwar in eine erfindungsgemäß vorgesehene Nachdosierstellung. Diese Nachdosierstellung ist eine je nach dem Produkt einstellbare Stellung, die zwischen der Schließstellung und der Feindosierstellung liegt.

Bei sehr großen Gewichten oder Volumina kann erfindungsgemäß vorgesehen sein, daß die Drehklappe zu Beginn des Dosiervorgangs in eine Vorportionierstellung bewegt wird, die eine nochmals größere Öffnung der Drehklappe größer als die Groböffnung darstellt.

Insbesondere kann jedoch vorgesehen sein, daß die Vorderkante der Drehklappe eine von der geraden Linie abweichende Ausnehmung aufweist. Hiermit kann der Öffnungsquerschnitt der Drehklappe in der Feindosierstellung exakter definiert werden. Beispielsweise kann die Ausnehmung eine Stufenform aufweisen, so daß in der Feinflußstellung nur ein kleiner Teil der Drehklappe in Längsrichtung eine Öffnung aufweist. Es kann aber ebenfalls vorgesehen sein, daß die Ausnehmung eine von der Vorderkante ausgehend kontinuierlich abnehmende Querschnittsform aufweist, beispielsweise eine Dreieckform. Damit läßt sich eine nochmals genauere Feinportionierung durchführen.

Damit in der Feindosierstellung das Gut auch nur aus einem Teil des Schachtes durch die verbleibende Öffnung ausfließt, geht insbesondere die Trennwand von der Rückwand bis zur Vorderwand des Schachts.

Die Erfindung schlägt vor, daß die Ausnehmung in der Vorderkante der Drehklappe vollständig auf einer Seite der Trennwand liegt.

Insbesondere kann vorgesehen sein, daß die Länge der Ausnehmung in Richtung der Vorderkante gemessen dem Abstand der Trennwand von der Seitenwand des Schachts entspricht.

Die einen Teil der Feindosiereinrichtung bildende Ausnehmung kann an beliebiger Stelle der Vorderkante der Absperrklappe angeordnet sein. Sie kann beispielsweise an einem Ende der Vorderkante angeordnet sein, so daß die Nachdosierung auf die unter der Dosiereinrichtung liegende Abwägeeinrichtung dort an einer bestimmten seitlichen Stelle geschieht.

In nochmaliger Weiterbildung der Erfindung kann vorgesehen sein, daß auf der Innenseite der Drehklappe Vorsprünge, Stifte o. dgl. angeordnet sind, die bei Bewegung der Drehklappe das auf ihrer Innenseite ruhende Gut auflockern können.

In nochmaliger Weiterbildung der Erfindung kann die Vorrichtung eine Rütteleinrichtung aufweisen. Diese kann beispielsweise dadurch gebildet werden, daß die Drehklappe von ihrem Antrieb in kurze schnelle Schwingungen mit geringer Auslenkung versetzt wird, beispielsweise in vollständig geschlossener oder vollständig geöffneter Stellung der Drehklappe. Durch diese Rütteleinrichtung lassen sich Brückenbildungen in dem zu behandelnden Gut beseitigen.

Erfindungsgemäß kann an der Vorderwand des Schachts ein Leitblech angeordnet sein, das gegebenenfalls zusammen mit der Drehklappe bewegbar ist, beispielsweise dadurch, daß es mit dieser über einen Schlepphebel o. dgl. verbunden ist. Damit läßt sich noch eine gewisse Beeinflussung der Produktströmung erreichen.

Die Vorrichtung kann erfindungsgemäß eine Einrichtung zur Referenzpunktbestimmung aufweisen, beispielsweise dadurch, daß der Antrieb die Drehklappe gegen einen Anschlag fährt, und das Erreichen des Anschlags beispielsweise durch einen Schalter oder eine Sensoreinrichtung festgestellt wird. Ebenfalls möglich ist die Feststellung des Erreichens des Anschlags dadurch, daß der Stromverbrauch des Motors ansteigt.

Erfindungsgemäß kann zur Verbesserung oder Unterstützung des Produktflusses eine Fluidisierungseinrichtung vorgesehen sein, die beispielsweise Druckluft oder ein Druckgas in den Schacht bläst, und zwar vorzugsweise mit geringem Abstand über der Rückwand des Schachts. Es kann gegebenenfalls durch diese Einrichtung auch eine Schutzbegasung des Produkts erfolgen. Es können hierzu mehrere Düsen mit einer Ausblasrichtung parallel zu der Strömungsrichtung und zu der Ebene der Rückwand vorgesehen sein.

Der Antrieb für die Drehklappe kann insbesondere von einem Servomotor und/oder einem Schrittmotor gebildet sein.

Erfindungsgemäß kann vorgesehen sein, daß die Drehklappe unter der Rückwand des Schachts hindurchgreift, also nicht stumpf auf der Rückwand anliegt.

Bei der Abfüllung von körnigen Produkten, z. B. Sämereien, kann es wünschenswert sein, die Dosierung so vorzunehmen, daß einzelne Körner beim Schließen der Drehklappe nicht zerschnitten werden. Hierzu kann erfindungsgemäß vorgesehen sein, daß die Unterkante der Rückwand elastisch nachgiebig ausgebildet ist, was insbesondere dadurch erreicht werden kann, daß die Unterkante eine gummielastische Lippe aufweist. Dann wird beim Schließen der Drehklappe ein einzelnes Korn allenfalls von der Dichtlippe festgeklemmt. Es tritt also weder eine Zerquetschung noch eine Zerteilung des einzelnen Korns auf.

Beim Abfüllen von Produkten kann das Problem auftreten, daß das Produkt Schüttgewichtsschwankungen bzw. Dichteänderungen aufweist. Dies hängt von der Produktion ab. Eine Änderung des Schüttgewichts verändert bei gleichbleibendem Abfüllgewicht den Füllgrad der Verpackung. Um eine solche Änderung des Schüttgewichts erkennen und Gegenmaßnahmen einleiten zu können, kann erfindungsgemäß die Vorrichtung einer Einrichtung zur Abgabe eines definierten Volumens aufweisen, wobei zur Abgabe dieses definierten Volumens insbesondere die Feindosiereinrichtung verwendet werden kann. Eine solche Einrichtung zur Abgabe eines definierten Volumens kann beispielsweise so aufgebaut sein, daß bei geschlossener Drehklappe und gefülltem Schacht ein zusätzlicher Schieber in den Schacht so eingeschoben wird, daß ein Nachrutschen in diesen so definierten Raum nicht mehr möglich ist. Dann kann durch Öffnen der Drehklappe der gefüllte Inhalt dieses Volumens auf die Waage abgegeben und dort gewogen werden.

Eine solche Einrichtung kann von einer an der Vorrichtung vorhandenen Steuerung durchgeführt werden.

Weitere Merkmale, Einzelheiten und Vorzüge ergeben sich aus der folgenden Beschreibung einer bevorzugten Ausführungsform der Erfindung. Hierbei zeigen:
- Fig. 1: eine schematische Übersicht einer Abfüllwaage;
- Fig. 2: schematisch einen Querschnitt durch einen zu der Abfüllwaage gehörenden Schacht mit einer Absperreinrichtung in Form einer Drehklappe;
- Fig. 3: eine Ansicht des Schachts der Fig. 2 von links;
- Fig. 4: eine der Fig. 2 entsprechende Teilansicht mit einem eingesetzten Leitblech.

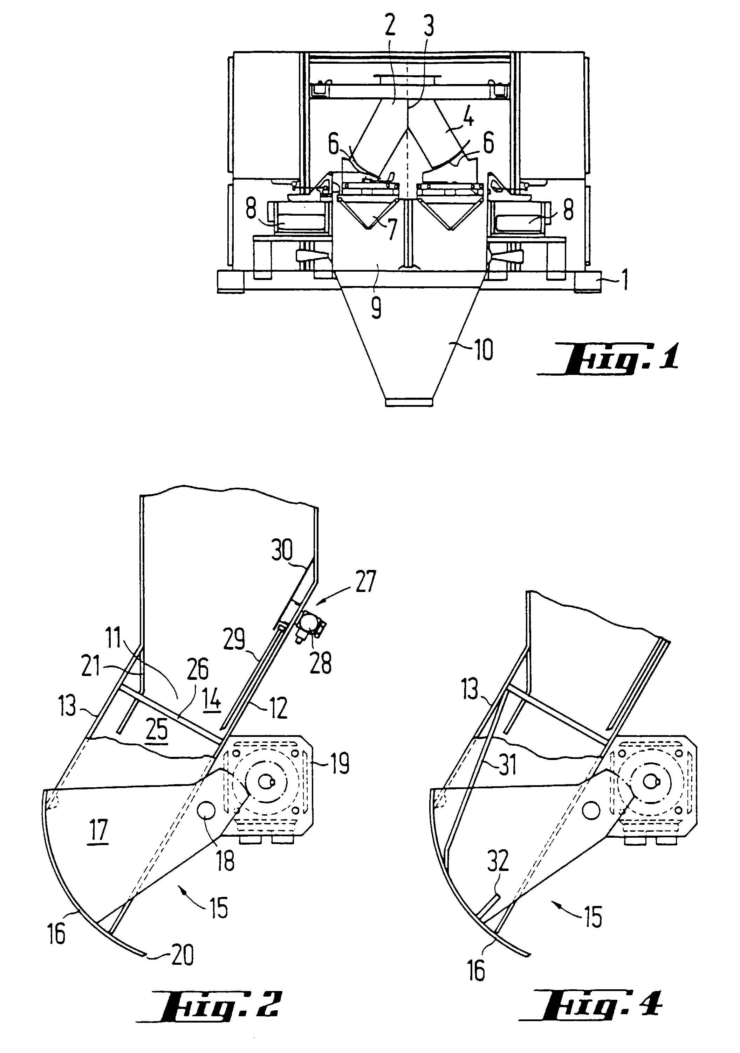

Fig. 1 zeigt zunächst in einer Übersichtszeichnung schematisch eine Abfüllwaage mit einem Maschinenrahmen 1, an dem die verschiedenen Einzelteile angebracht sind. Das zu wiegende und abzufüllende Produkt wird durch einen Zuführschacht 2 zugeführt. Der Zuführschacht ist in der Mitte durch eine Trennwand 3 getrennt. Er führt zu zwei Dosiereinrichtungen 4, in denen jeweils eine Absperrklappe 6 in Form einer Drehklappe zum Unterbrechen des Produktstroms angeordnet sind. Unterhalb der Drehklappe 6 befindet sich jeweils die Lastschale 7 für die nur angedeutete Wägeeinrichtung 8. Das abgewogene Produkt wird dann über einen Auslaufkasten 9 in einen Auslauftrichter 10 gegeben, von wo aus es in die Verpackung fällt.

Fig. 2 zeigt nun in vergrößertem Maßstab Einzelheiten der Dosiereinrichtungen 4. Die Dosiereinrichtung enthält einen Schacht 11, der in der Darstellung der Fig. 2 im Schnitt dargestellt ist. Der Schacht 11 enthält eine ebene Rückwand 12, die gegenüber der Senkrechten etwas geneigt verläuft. Der Rückwand 12 gegenüberliegend ist die Vorderwand 13 im wesentlichen parallel zur Rückwand 12 angeordnet, so daß sich zusammen mit den Seitenwänden 14 ein Schacht 11 mit rechteckigem Querschnitt ergibt.

An der Unterseite des Schachts 11 ist als Absperrklappe eine Drehklappe 15 angeordnet. Die Drehklappe 15 enthält im dargestellten Ausführungsbeispiel ein Verschlußblech 16, das die Form eines Kreiszylindermantels aufweist. An den Stirnseiten des Verschlußblechs 16 sind kreissektorartige Seitenteile 17 angeordnet, die etwa senkrecht auf dem Verschlußblech 16 stehen und eine seitliche Begrenzung der Drehklappe 15 bilden. Die Seitenteile 17 sind unmittelbar hinter der Rückwand 12 an einer Welle 18 gelagert, die eine parallel zur Rückwand 12 des Schachts 11 verlaufende Drehachse bildet.

An der Rückwand 12 des Schachts 11 ist ein nicht näher dargestellter Servomotor 19 angeflanscht, der getrieblich mit den Seitenteilen 17 der Drehklappe verbunden ist und diese um die Schwenkachse der Welle 18 verschwenken kann. In der in Fig. 2 dargestellten Stellung ist die Drehklappe 15 in ihrer Verschlußstellung dargestellt, in der die Vorderkante 20 des Verschlußblechs 16 unter der Unterkante der Rückwand 12 hindurchgeschwenkt ist. Sowohl die Rückwand 12 als auch die Vorderwand 13 des Schachts 11 reichen exakt bis an die Innenseite des Verschlußblechs 16 heran, so daß eine Abdichtung gegen das Herausfließen des zu behandelnden Guts gegeben ist. Die Seitenwände 14 reichen ebenfalls bis zu der Innenseite des Verschlußblechs 16.

Im Bereich des Eingangs in den Schacht 11 ist der Rückwand 12 gegenüberliegend ein Leitblech 21 mit einem gewissen Abstand vor der Vorderwand 13 angeordnet, das dann nach einem kurzen parallelen Verlauf in einer Kante endet.

Das zu wiegende Produkt gelangt in das Innere des Schachts 11. Es liegt dann auf der Innenseite des Verschlußblechs 16 auf. Soll das Produkt nun in die darunterliegende Wägeeinrichtung 8 abgegeben werden, wird der Servomotor 19 in Gang gesetzt, der die Drehklappe 15 im Uhrzeigersinn verschwenkt. Dadurch gelangt die Vorderkante 20 des Verschlußblechs 16 auf die in Fig. 2 linke, d. h. der Vorderwand 13 zugewandte Seite der Rückwand 12, so daß sich dort ein Spalt bildet, durch den das abzuwiegende Gut in die Lastschale 7 gelangen kann.

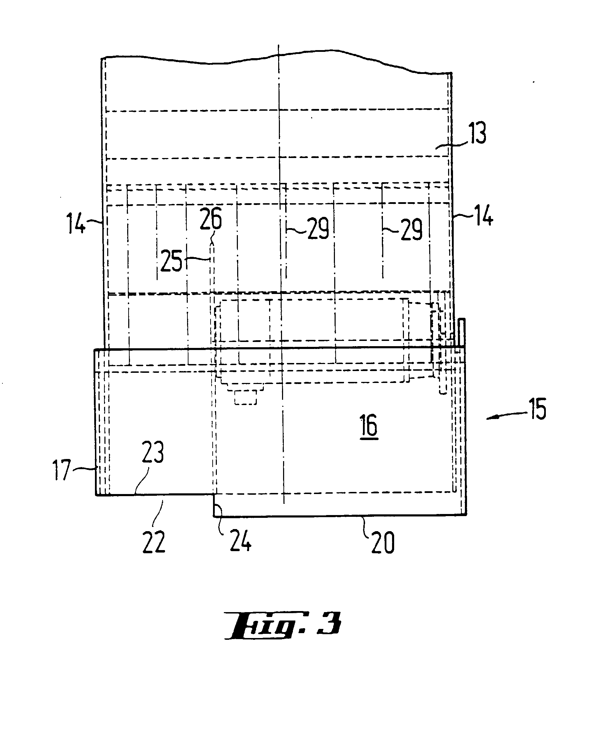

Fig. 3 zeigt nun eine Seitenansicht der Anordnung von links in Fig. 2. Wie man der Fig. 3 entnehmen kann, enthält das Verschlußblech 16 der Drehklappe 15 in seiner Vorderkante 20, siehe Fig. 2, eine Ausnehmung 22. Diese Ausnehmung ist stufenförmig ausgebildet und erstreckt sich von dem einen Ende der Vorderkante, d. h. von dem Seitenteil 17, über einen kleineren Teil der Länge der Vorderkante 20. Die Ausnehmung wird von einer parallel zur Vorderkante verlaufenden Längskante 23 und einer im dargestellten Beispiels senkrecht zur Vorderkante verlaufenden Seitenkante 24 begrenzt. Die Ausnehmung 22 könnte auch an einer anderen Stelle ausgehend von der Vorderkante 20 des Verschlußblechs 16 angeordnet sein, beispielsweise in der Mitte. Sie könnte auch eine andere Form als die dargestellte Stufenform aufweisen, beispielsweise dreieckig oder trapezförmig sein.

In dem Schacht 11 erstreckt sich eine Trennwand 25 zwischen der Rückwand 12 und der Vorderwand 13. Die Oberkante 26 der Trennwand 25 ist sowohl in Fig. 3 als auch in Fig. 2 zu sehen. Die Trennwand teilt den Schacht in zwei Hälften auf, von denen die eine, kleinere Hälfte an der gleichen Stelle des Schachts angeordnet ist wie die Ausnehmung 22 in der Vorderkante 20 des Verschlußblechs 16. Auf diese Weise bildet die Trennwand zusammen mit der Ausnehmung 22 eine Feindosiereinrichtung, deren Bedeutung im folgenden noch beschrieben wird.

Zum Öffnen wird durch den Servomotor 19 die Drehklappe 15 zunächst bis in eine Grobdosierstellung verschwenkt. Diese liegt kurz vor der möglichen maximalen Öffnungsstellung der Drehklappe 15. Das Produkt fällt im wesentlichen ungehindert in die Lastschale 7. Sobald die Wägeeinrichtung 8 einen von dem gewünschten Gewicht und dem zu wiegenden Material abhängigen Wert feststellt, wird der Servomotor 19 so angesteuert, daß er die Drehklappe 15 in die Feindosierposition bewegt, also teilweise schließt. In der Feindosierposition liegt die Vorderkante 20 des Verschlußblechs wieder hinter der Rückwand, während die Längskante 23 der Ausnehmung 22 noch vor der Rückwand 12 liegt. Dadurch kann das abzuwiegende Produkt nur durch den Teilschacht und die kleine durch die Ausnehmung 22 gebildete Öffnung aus dem Schacht herausströmen. Sobald die Abwägeeinrichtung 8 den gewünschten Endwert feststellt, wird die Drehklappe 15 vollständig geschlossen. Aufgrund der Berücksichtigung des Fallwegs rechnet die Abwägeeinrichtung dabei hoch. Stellt die Abwägeeinrichtung 8 nun fest, daß das Gewicht noch nicht erreicht ist, wird die Drehklappe 15 nochmals kurz um einen Betrag geöffnet, der kleiner ist als die Feindosierposition.

Soll ein Gewicht von beispielsweise mehr als 3 kg abgewogen werden, so kann der Servomotor 19 die Drehklappe bei Beginn des Befüllungsvorgangs über die erwähnte Grobdosierstellung hinaus vollständig öffnen, damit das Befüllen schneller geht.

Zur Unterstützung des Produktflusses kann die in Fig. 2 dargestellte Fluidisiereinrichtung 27 verwendet werden. Diese enthält einen Anschluß 28 für eine Druckluftleitung und innerhalb der Vorrichtung mindestens ein Rohr 29, das in Strömungsrichtung des Produkts mit geringem Abstand vor der Rückwand 12 verläuft. Vorzugsweise sind mehrere derartige Rohre über die Rückwand 12 verteilt angeordnet. An den unteren Enden der Rohre sind Luftaustrittsöffnungen bzw. Düsen gebildet, die dafür sorgen, daß der Luftstrahl in Strömungsrichtung gerichtet ist. Zum Schutz der Einrichtung kann ein Abdeckblech 30 innerhalb des Einlauftrichters vorhanden sein.

Bei Bedarf kann über die Fluidisiereinrichtung 27 auch ein Schutzgas eingeführt werden.

Fig. 4 zeigt eine geringfügig abgeänderte Ausführungsform der Vorrichtung nach den Figuren 1 bis 3. Hier ist vor der Vorderwand 13 ein zusätzliches Leitblech 31 vorgesehen, das in Verschlußstellung leicht schräg verläuft. Es kann so ausgebildet sein, daß es sich bei der Bewegung des Verschlußblechs 16 mindestens teilweise mitbewegt, wozu beispielsweise ein Schlepphebel vorhanden sein kann, der aus Gründen der Vereinfachung nicht dargestellt ist.

Bei der Ausführungsform nach Fig. 4 sind auf der Innenseite des Verschlußblechs 16 der Drehklappe 15 einzelne Vorsprünge 32 vorhanden, beispielsweise Stifte. Diese sind so angeordnet, daß sie die Bewegung der Absperrklappe 15 nicht behindern, also innerhalb desjenigen Bereichs, der immer innerhalb des Schachts liegt. Diese Vorsprünge können dazu beitragen, verfestigtes Abfüllgut loszubrechen.

Die Erfindung kann eine Rütteleinrichtung aufweisen, die einfach dadurch gebildet wird, daß der Servomotor kurze schnelle Schwingungen der Absperrklappe 15 durchführt, beispielsweise in vollständig geschlossenem Zustand der Drehklappe 15.

Ein typischer Abfüllvorgang kann beispielsweise folgendermaßen vorgehen. Zunächst wird die Drehklappe 15 in Grobflußstellung geöffnet. Dabei wird sowohl der in Fig. 3 rechts der Trennwand 15 gelegene größere Teil des Schachts 11 als auch der links gelegene kleinere Teil des Schachts geöffnet. Die tatsächliche Position der Drehklappe 15 ist dabei abhängig von der Abfüllmenge und von dem Produkt.

Nach Erreichen des Grobabschaltpunkts, welcher durch die Auswägeeinrichtung 8 festgestellt wird, fährt der Servomotor 19 die Drehklappe 15 auf Feinflußstellung zurück. Dabei ist der rechts der Trennwand 25 gelegene Teil des Schachts vollkommen geschlossen, während der Querschnitt der verbleibenden Öffnung durch die Form der Ausnehmung 22 in der Vorderkante 20 der Drehklappe 15 und die Feinflußstellung bestimmt wird. Nach Erreichen des Feinabschaltpunkts wird die Drehklappe 15 vollkommen geschlossen. Alle genannten Klappenstellungen können frei gewählt werden. Wird beim Abfüllvorgang festgestellt, daß die Nennfüllmenge unterschritten ist, besteht die Möglichkeit, die Drehklappe 15 wieder in eine Nachportionierstellung zu öffnen. Diese Nachportionierstellung ist eine beliebige Stellung der Drehklappe 15 zwischen Schließstellung und maximaler Feinflußstellung.

Bei Abfüllmengen über einem bestimmten Gewicht oder einem bestimmten Volumen, beispielsweise 3 kg, erfolgt vor dem eigentlichen Abfüllvorgang ein Öffnen der Drehklappe 15 in eine Vorportionierstellung, die über der Grobflußstellung liegt. Nach einer einstellbaren Zeit fährt die Drehklappe 15 auf die Grobflußstellung zurück und der normale Abfüllvorgang schließt sich an.

Bei kleinen Volumina bzw. kleinen Gewichten liegt die Grobflußstellung unterhalb der maximal möglichen Feinflußstellung. In diesem Fall bleibt der größere Teil des Schachts, in Fig. 3 rechts der Trennwand 25, ständig geschlossen. Auch hier ist eine Feinflußstellung durch ein Verdrehen der Drehklappe 15 möglich. Beim Schließen der Drehklappe 16 trifft deren Vorderkante 20 fast rechtwinklig auf die Verlängerung der Rückwand 12. Zwischen der Drehklappe 16 und der Rückwand 12 ist kein Spalt vorhanden. Bei grobkörnigem Gut kann es vorkommen, daß einzelne Körner von der Vorderkante gequetscht werden. Um diese Quetschung bei speziellen Produkten, beispielsweise Sämereien, zu vermeiden, kann erfindungsgemäß die Unterkante der Rückwand 12 mit einer elastischen Dichtlippe versehen sein, deren Elastizität je nach den Umständen des Einzelfalls ausgewählt werden kann. Befindet sich beim Schließen der Drehklappe dann ein einzelnes Korn gerade an der Unterkante, so wird es von der Drehklappe 16 nicht zerquetscht, sondern von der elastisch nachgebenden Dichtlippe geklemmt. Es bleibt daher erhalten und wird beim nächsten Dosiervorgang unbeschädigt mit abgeworfen.

## Patentansprüche

1. Vorrichtung zum Dosieren von Volumina und/oder Gewichten eines freifließenden Guts, mit
1.1 einem Schacht (11) für das zu behandelnde Gut, der
1.1.1 eine Rückwand (12) aufweist, über die das Gut rutscht,
1.2 einer Drehklappe (15) zum Verschließen des Schachts (11), die
1.2.1 an dem unteren Ende des Schachts (11) angeordnet und
1.2.2 um eine im Bereich der Rückwand (12) des Schachts (11) liegende Achse (18) verdrehbar ausgebildet ist und
1.2.3 deren Vorderkante (20) eine Ausnehmung (22) aufweist, sowie mit
1.3 einem motorischen Antrieb (19) für die Drehklappe (15), der derart ausgebildet ist, daß er
1.3.1 die Drehklappe (15) zwischen einer maximalen Öffnungsstellung und einer Schließstellung bewegen kann, dadurch gekennzeichnet, daß der Antrieb die Drehklappe (15) in jeder Zwischenstellung festhalten kann und der Schacht (11) mindestens im Bereich der Rückwand (12) durch eine Trennwand (25) unterteilt ist, die mindestens bis zu dem Ende der Ausnehmung (22) in der Vorderkante (20) der Drehklappe (15) in deren Feinflußstellung reicht.

2. Vorrichtung nach Anspruch 1, bei der die der Rückwand (12) gegenüberliegende Vorderwand (13) des Schachts nicht verstellbar ausgebildet ist.

3. Vorrichtung nach Anspruch 1 oder 2, mit einer einer Grobflußstellung entsprechenden Öffnungsstellung der Drehklappe (15).

4. Vorrichtung nach einem der vorhergehenden Ansprüche, mit einer einer Feinflußstellung entsprechenden Öffnungsstellung der Drehklappe (15).

5. Vorrichtung nach einem der vorhergehenden Ansprüche, mit einer einer Nachdosierstellung entsprechenden Öffnungsstellung der Drehklappe (15).

6. Vorrichtung nach einem der vorhergehenden Ansprüche, mit einer einer Vorportionierungsstellung entsprechenden Öffnungsstellung der Drehklappe (15).

7. Vorrichtung nach einem der vorhergehenden Ansprüche, mit einer Feindosiereinrichtung.

8. Vorrichtung nach einem der vorhergehenden Ansprüche, bei der die Ausnehmung (22) der Drehklappe (15) Stufenform und/oder eine von der Vorderkante (20) kontinuierlich abnehmende Querschnittsform aufweist.

9. Vorrichtung nach einem der vorhergehenden Ansprüche, bei der die Trennwand (25) von der Rückwand (12) bis zur Vorderwand (13) durchgeht.

10. Vorrichtung nach Anspruch 9, bei der die Ausnehmung (22) in der Vorderkante (20) der Drehklappe (15) vollständig auf einer Seite der Trennwand (25) liegt und vorzugsweise die Länge der Ausnehmung (22) in Richtung der Vorderkante (20) gemessen dem Abstand der Trennwand (25) von der Seitenwand (14) des Schachts (11) entspricht.

11. Vorrichtung nach einem der vorhergehenden Ansprüche, bei der auf der Innenseite der Drehklappe (15) Vorsprünge, Stifte o. dgl. (32) angeordnet sind.

12. Vorrichtung nach einem der vorhergehenden Ansprüche, mit einer Rütteleinrichtung.

13. Vorrichtung nach einem der vorhergehenden Ansprüche, mit einem zusätzlichen Leitblech (31) im Bereich der Vorderwand (13), das gegebenenfalls zusammen mit der Drehklappe (15) bewegbar ist.

14. Vorrichtung nach einem der vorhergehenden Ansprüche, mit einer Einrichtung zur Referenzpunktbestimmung.

15. Vorrichtung nach einem der vorhergehenden Ansprüche, mit einer Fluidisierungseinrichtung (27) im Bereich der Rückwand (12).

16. Vorrichtung nach einem der vorhergehenden Ansprüche, bei der der Antrieb für die Drehklappe (15) von einem Servomotor (19) gebildet wird, insbesondere einem Schrittmotor.

17. Vorrichtung nach einem der vorhergehenden Ansprüche, bei der die Drehklappe (15) unter der Rückwand (12) des Schachts (11) hindurch bewegbar ist.

18. Vorrichtung nach einem der vorhergehenden Ansprüche, mit einer Einrichtung zur Feststellung der augenblicklichen Position der Drehklappe (15).

19. Vorrichtung nach einem der vorhergehenden Ansprüche, bei der die Unterkante der Rückwand (12) elastisch nachgiebig ausgebildet ist, insbesondere eine gummielastische Lippe aufweist.

20. Vorrichtung nach einem der vorhergehenden Ansprüche, mit einer Einrichtung zur Abgabe eines definierten Volumens, insbesondere mit Hilfe der Feindosiereinrichtung.

## Claims

1. Apparatus for dosing volumes and/or weights of a free-flowing material, having
1.1 a chute (11) for the material to be handled, which
1.1.1 has a rear wall (12) over which the material slides,
1.2 a rotary flap or valve (15) for closing the chute (11), which
1.2.1 is located at the lower end of the chute (11) and
1.2.2 is constructed so as to rotate about an axis (18) located in the vicinity of the rear wall (12) of the chute (11) and
1.2.3 whose leading edge (20) has a recess (22), as well as having
1.3 a motor drive (19) for the rotary valve (15) and which is constructed in such a way that it
1.3.1 can move the rotary valve (15) between a maximum open position and a closed position,
characterized in that the drive can stop the rotary valve (15) in any intermediate position and the chute (11), at least in the vicinity of the rear wall (12), is subdivided by a partition (25), which extends at least up to the end of the recess (22) in the leading edge (20) of the rotary valve (15) in its fine flow position.

2. Apparatus according to claim 1, wherein the front wall (13) of the chute facing the rear wall (12) does not have an adjustable construction.

3. Apparatus according to claim 1 or 2 with an open position of the rotary valve (15) corresponding to the coarse flow position.

4. Apparatus according to one of the preceding claims with an open position of the rotary valve (15) corresponding to a fine flow position.

5. Apparatus according to one of the preceding claims with an open position of the rotary valve (15) corresponding to an afterdosing position.

6. Apparatus according to one of the preceding claims with an open position of the rotary valve (15) corresponding to a preportioning position.

7. Apparatus according to one of the preceding claims with a fine dosing device.

8. Apparatus according to one of the preceding claims, wherein the recess (22) of the rotary valve (15) has a step shape and/or a cross-sectional shape continuously decreasing from the leading edge (20).

9. Apparatus according to one of the preceding claims, wherein the partition (25) passes from the rear wall (12) to the front wall (13).

10. Apparatus according to claim 9, wherein the recess (22) in the leading edge (20) of the rotary valve (15) is positioned entirely on one side of the partition (25) and preferably the length of the recess (22) in the direction of the leading edge (20) corresponds to the distance from the partition (25) to the side wall (14) of the shaft (11).

11. Apparatus according to one of the preceding claims, wherein projections, pins or the like (32) are positioned on the inside of the rotary valve (15).

12. Apparatus according to one of the preceding claims having a vibrating device.

13. Apparatus according to one of the preceding claims with an additional guide plate (31) in the vicinity of the front wall (13), which is optionally movable together with the rotary valve (15).

14. Apparatus according to one of the preceding claims with a reference point determination device.

15. Apparatus according one of the preceding claims with a fluidizing device (27) in the vicinity of the rear wall (12).

16. Apparatus according to one of the preceding claims, wherein the drive for the rotary valve (15) is formed by a servomotor (19), particularly a stepping motor.

17. Apparatus according to one of the preceding claims, wherein the rotary valve (15) can be moved through below the rear wall (12) of the chute (11).

18. Apparatus according to one of the preceding claims with a device for determining the instantaneous position of the rotary valve (15).

19. Apparatus according to one of the preceding claims, wherein the lower edge of the rear wall (12) has an elastic resilient construction, particularly a rubber elastic lip.

20. Apparatus according to one of the preceding claims with a device for delivering a clearly defined volume, particularly with the aid of the fine dosing device.

## Revendications

1. Dispositif pour le dosage de volumes et/ou de poids d'une denrée à écoulement libre comprenant
1.1 une colonne (11) pour la denrée à travailler qui
1.1.1présente une paroi arrière (12) par-dessus laquelle glisse la denrée,
1.2un clapet rotatif (15) pour la fermeture de la colonne (11), qui
1.2.1 est disposé à l'extrémité inférieure de la colonne (11) et
1.2.2 qui est conçu pour tourner autour d'un axe (18) se trouvant dans la zone de la paroi arrière (12) de la colonne (11) et
1.2.3 dont le bord avant (20) présente un évidement (22), comprenant également
1.2 un entraînement motorisé (19) destiné au clapet rotatif (15) et réalisé de sorte qu'il
1.3.1 peut déplacer le clapet rotatif (15) entre une position d'ouverture maximale et une position de fermeture, caractérisé en ce que l'entraînement peut maintenir le clapet rotatif (15) dans chaque position intermédiaire et en ce que la colonne (11) est divisée au moins dans la zone de la paroi arrière (12) par une cloison séparatrice (25) qui va au moins jusqu'à l'extrémité de l'évidement (22) dans le bord avant (20) du clapet rotatif (15) en position de débit de précision.

2. Dispositif selon la revendication 1, où la paroi avant (13) de la colonne, opposée à la paroi arrière (12), n'est pas mobile.

3. Dispositif selon la revendication 1 ou 2, comprenant une position d'ouverture du clapet rotatif (15) correspondant à une position de débit grossier.

4. Dispositif selon l'une des revendications précédentes comprenant une position d'ouverture du clapet rotatif (15) correspondant à une position de débit de précision.

5. Dispositif selon l'une des revendications précédentes comprenant une position d'ouverture du clapet rotatif (15) correspondant à une position de dosage ultérieur.

6. Dispositif selon l'une des revendications précédentes comprenant une position d'ouverture du clapet rotatif (15) correspondant à une position de mise en portion préalable.

7. Dispositif selon l'une des revendications précédentes comprenant un dispositif de dosage de précision.

8. Dispositif selon l'une des revendications précédentes où l'évidement (22) du clapet rotatif (15) présente une forme étagée et/ou une forme de section transversale diminuant continuellement depuis le bord avant (20).

9. Dispositif selon l'une des revendications précédentes où la cloison séparatrice (25) va de la paroi arrière (12) à la paroi avant (13).

10. Dispositif selon la revendication 9, où l'évidement (22) se trouve dans le bord avant (20) du clapet rotatif (15) complètement sur une face de la cloison séparatrice (25) et de préférence la longueur de l'évidement (22), mesurée dans le sens du bord avant (20), correspond à l'écart entre la cloison séparatrice (25) et la paroi latérale (14) de la colonne (11).

11. Dispositif selon l'une des revendications précédentes où des saillies, des broches ou similaires (32) sont disposées sur la face interne du clapet rotatif (15).

12. Dispositif selon l'une des revendications précédentes comprenant un dispositif à vibrations.

13. Dispositif selon l'une des revendications précédentes comprenant une tôle de déflexion supplémentaire (31) dans la zone de la paroi avant (13) qui est mobile le cas échéant en même temps que le clapet rotatif (15).

14. Dispositif selon l'une des revendications précédentes comprenant un dispositif de détermination du point de référence.

15. Dispositif selon l'une des revendications précédentes comprenant un dispositif de fluidisation (27) dans la zone de la paroi arrière (12).

16. Dispositif selon l'une des revendications précédentes où l'entraînement pour le clapet rotatif (15) est constitué par un servomoteur (19) en particulier un moteur pas à pas.

17. Dispositif selon l'une des revendications précédentes où le clapet rotatif (15) est mobile en passant sous la paroi arrière (12) de la colonne (11).

18. Dispositif selon l'une des revendications précédentes comprenant un dispositif pour la détermination de la position momentanée du clapet rotatif (15).

19. Dispositif selon l'une des revendications précédentes où le bord inférieur de la paroi arrière (12) est de réalisation souple et élastique, et présente en particulier une lèvre en caoutchouc élastique.

20. Dispositif selon l'une des revendications précédentes comprenant un dispositif pour la distribution d'un volume défini en particulier à l'aide du dosage de précision.
